# EUROPEAN PATENT SPECIFICATION

(11) **EP 3 010 215 B1**
(45) Date of publication and mention of the grant of the patent: **28.06.2017**
(21) Application number: 14290309.5
(22) Date of filing: 14.10.2014
(51) Int. Cl.: H04M 3/18, H04B 3/32, H04M 3/34, H04M 11/06, H04B 3/487, H04M 3/30

(54) **A BAD WIRING DETECTION TOOL AND METHOD**
WERKZEUG UND VERFAHREN ZUR ERKENNUNG VON VERDRAHTUNGSFEHLERN
OUTIL DE DÉTECTION DE CÂBLAGE DÉFECTUEUX ET PROCÉDÉ

(43) Date of publication of application: 20.04.2016
(73) Proprietor: ALCATEL LUCENT, 92100 Boulogne-Billancourt (FR)
(72) Inventor: Wahibi, Issam, 2018 Antwerpen (BE); Drooghaag, Benoît, 6041 Gosselies (BE)
(74) Representative: ALU Antw Patent Attorneys

(56) References cited:
- WO-A2-2012/018289
- "Self-FEXT cancellation (Vectoring) for use with VDSL2 transceivers; G.993.5 (04/10)", ITU-T STANDARD, INTERNATIONAL TELECOMMUNICATION UNION, GENEVA ; CH, no. G.993.5 (04/10), 22 April 2010 (2010-04-22), pages 1-80, XP044008847, [retrieved on 2010-09-03]

## Description

### Technical Field

The present disclosure generally relates to analysing and diagnosing physical media in access networks, like for instance the twisted pair copper lines used for broadband Digital Subscriber Line (DSL) services. The disclosure in particular concerns analysing and detecting bad wiring configurations that result in non-optimal crosstalk mitigation.

### Background

Crosstalk resulting from interference between different lines is a major source of channel impairments in wired communication systems, such as Digital Subscriber Line (DSL) systems. Crosstalk between Digital Subscriber Line (DSL) twisted pairs that interfere with each other results in unwanted leakage of the DSL signals sent over certain twisted pairs, i.e. the disturbing communication lines, into other twisted pairs, i.e. the victim communication lines. Such crosstalk represents noise in the victim communication lines that reduces the Signal-to-Noise Ratio (SNR) and consequently also the bit rate achievable on the victim communication lines.

As the demand for higher data rates increases, DSL systems are evolving towards using higher frequency bands, wherein crosstalk between neighbouring lines, i.e. lines that are in close vicinity over part or whole of their length such as for instance twisted copper pairs that form part of a single cable binder or bundle, is even more pronounced.

ITU-T Recommendation G.993.5 entitled "Self-FEXT Cancellation (Vectoring) for Use with VDSL2 Transceivers" describes vectoring, which is a crosstalk cancellation mechanism for DSL lines. Crosstalk induced by disturbing DSL lines into a victim DSL line is cancelled by adding an anti-signal to the victim DSL line that compensates for the crosstalk noise from the disturbing DSL lines. Vectoring can be done for plural disturbing DSL lines enabling to suppress simultaneously the crosstalk from all these disturbing DSL lines within the victim DSL line. In the downstream direction, i.e. the direction from the central office (CO) to the customer premises equipment (CPE), crosstalk cancelling is done by a pre-coder that pre-compensates for crosstalk by adding the anti-signal of the crosstalk to the wanted DSL signal that will be transmitted over the victim DSL line. In the upstream direction, i.e. the direction from CPE to CO, crosstalk cancellation is executed by a post-coder that post-compensates for crosstalk by adding the anti-signal of the crosstalk to the DSL signal received from the victim DSL line. The crosstalk cancellation through vectoring in other words can be performed at the transmitter side and/or at the receiver side.

The International publication WO 2012/018289 discloses crosstalk determination and cancellation for each line of a plurality of lines of a vectoring group in a DSL communication system.

Vectoring relies on grouping communication lines in a so called vectoring group. Ideally, the vectoring group contains lines that form part of the same binder or bundle, but a vectoring group may also contain lines that belong to two or more different binders. In such vectoring group, each communication line is considered as a disturbing communication line inducing crosstalk in all other lines, and each communication line is considered as a victim communication line receiving crosstalk from all other lines. The crosstalk channel between a disturber and a victim is measured for instance during initialisation and represented by a crosstalk channel coefficient in a crosstalk channel matrix, i.e. a coefficient per tone or frequency, wherein rows represent victims and columns represent disturbers, or vice versa. To measure for instance the crosstalk channel coefficient between two VDSL lines, a pilot signal is superimposed onto the SYNC symbols during initialisation of the disturbing VDSL line, and correlation techniques are applied to recognize the crosstalk noise induced by this pilot signal into the victim VDSL line. The crosstalk channel coefficient per tone is then calculated from the known pilot signal and the sensed noise. If the victims represent rows and the disturbers represent columns in the crosstalk channel matrix, each row in the crosstalk channel matrix constitutes a vector representing the entire crosstalk induced by all disturbers of the vectoring group into a single victim line. Theoretically, such vector enables to cancel the crosstalk of all disturbers into the victim line simultaneously through addition of a single anti-signal that represents the inverse of the aggregate crosstalk.

Vectoring has allowed DSL operators to maintain the twisted pair copper network for digital transmissions as a low cost alternative to investment in optical fibre deployment.

Signal vectoring is typically performed within an access node, wherein all the data symbols concurrently transmitted over, or received from, all communication lines of a vectoring group are available. For instance, vectoring is advantageously performed within a Digital Subscriber Line Access Multiplexer (DSLAM) deployed at a Central Office (CO) or as a fibre-fed remote unit closer to subscriber premises (street cabinet, pole cabinet, building cabinet, etc.). Ideally, the vectoring group should match the whole set of communication lines that physically and noticeably interact with each other. Yet, local loop unbundling (imposed by national regulation policies) and/or limited vectoring capabilities may prevent such an exhaustive approach, in which case the vectoring group may include only a sub-set only of all the physically interacting lines.

The choice of the vectoring group, i.e. the set of communication lines the signals of which are jointly processed, is rather critical for achieving good crosstalk mitigation performances. Within a vectoring group, each communication line is considered as a disturber line inducing crosstalk into the other communication lines of the group, and each communication line is considered as a victim line receiving crosstalk from the other communication lines of the group. Crosstalk from lines that do not belong to the vectoring group is treated as alien noise and is not cancelled through vectoring.

Vectoring becomes more and more mature and consequently has been selected by several DSL operators for large-scale deployment. One of the challenges however lies in the ability to group lines that share the same physical cable or binder in the same vectoring group. Alien crosstalk coming from other vectoring groups in other words must be minimized.

If communication lines share the same physical cable or binder while they do not belong to the same vectoring group, crosstalk between these lines will not be cancelled and can significantly impact the performance of these lines. If on the other hand communication lines belong to the same vectoring group while these lines do not share the same physical binder or cable, the signal processing efforts inherent to the vectoring technology and performed to mitigate crosstalk between these lines, is unnecessary because the crosstalk will be negligible. When such bad wiring configurations of lines are detected, the DSL operator can take corrective actions in order to enable an optimal selection of lines to benefit from the vectoring or crosstalk mitigation and consequently from a better quality of service.

In order to get an idea of the crosstalk between lines, the DSL operator could visualize the crosstalk heatmap. The crosstalk heatmap is a matrix that contains normalized crosstalk coefficients, averaged over frequency for each disturber lie on each victim line. Coefficient permutations could then be applied in order to regroup lines that have the most interaction between them. However, although crosstalk coefficients for a single victim line are comparable, the coefficients for different victim lines are not comparable. The reason is that the crosstalk coefficients are normalized by the attenuation function. For a single victim line, the same attenuation function and consequently the same normalization factor is applied. For different victim lines however, different attenuation functions and consequently different normalization factors are applied. The crosstalk heatmap in other words is not a good instrument to select the lines that are grouped/re-grouped into a single vectoring group.

### Summary

It is an objective to disclose a tool and method to detect bad wiring configurations that result in non-optimal crosstalk cancellation through vectoring and overcomes one or several of the disadvantages of existing solutions. It is a further objective to disclose a simple, non-intrusive tool and method for detecting bad wiring of DSLs that doesn't require manual operations or power variations, and that enables to rapidly generate rewiring recommendations for the DSL operator in order to enable the operator to optimize the effect of crosstalk cancellation through vectoring in order to improve or restore the quality of service.

Embodiments of the invention disclose a bad wiring detection tool adapted to detect bad wiring of a digital subscriber line or DSL that forms part of a vectoring group, the bad wiring tool being defined by claim 1, comprising:
- a first bitrate impact detector adapted to determine a bitrate impact of the DSL on each other DSL in the vectoring group;
- a second bitrate impact detector adapted to determine a bitrate impact on the DSL by each other DSL in the vectoring group; and
- a bad wired DSL selector adapted to select the DSL for re-wiring if the bitrate impact of the DSL on each other DSL in the vectoring group is below a first bitrate threshold and the bitrate impact on the DSL by each other DSL in the vectoring group is below a second bitrate threshold.

Thus, embodiments of the invention rely on detecting or measuring the bitrate impact on a line by other lines in the vectoring group, and on the bitrate impact of that line on the other lines in the vectoring group. When the bitrate impact on the line by all other lines in the vectoring group stays below a threshold, and when the bitrate impact of the line on all other lines in the vectoring group stays below a threshold, it is concluded that the line must not be crosstalk cancelled within this vectoring group. The line then is selected as candidate for re-wiring.

By relying on the bitrate impact, the tool makes use of operational data that are easy to collect in a non-intrusive manner. The tool does not need to collect carrier data like the crosstalk coefficients, direct line attenuation or power spectral density. No manual operations or profile reconfigurations, like for instance power variations, are required to generate and collect the information required to decide if a DSL is badly wired. The tool relies on an intuitive criterion, i.e. a bitrate impact threshold, as a result of which it is faster, non-intrusive and easier to deploy.

According to an optional aspect of the bad wiring detection tool, defined by claim 2, the first bitrate threshold is equal to the second bitrate threshold.

Indeed, although any skilled person will appreciate that the bitrate threshold set for impact on the line by other lines in the vectoring group and the threshold set for bitrate impact on other lines in the vectoring group by the line under consideration, may be different, embodiments of the invention may be simplified when these two thresholds are equal.

Further optionally, as defined by claim 3, in embodiments of the bad wiring detection tool, the bitrate impact corresponds to a gain in bitrate in a victim DSL as a result of cancellation of disturbances from a disturber DSL while vectoring is disabled.

Thus, embodiments of the invention may use the so called vectoring gain matrix. Elements in this matrix represent the gain in bitrate brought for a victim line by cancellation of each disturber line in the assumption that vectoring is disabled.

Also optionally, as defined by claim 4, in embodiments of the bad wiring detection tool, the bitrate impact corresponds to a loss in bitrate in a victim DSL as a result from non-cancellation of disturbances from a disturber DSL while vectoring is enabled.

Thus embodiments of the invention may use the so called vectoring cost matrix. Elements of this matrix represent the cost in bitrate brought for a victim line by non-cancellation of each disturber in the assumption that vectoring is enabled.

It is noticed that the use of either the vectoring gain matrix or the vectoring cost matrix is sufficient. Both in other words serve as alternatives in different embodiments of the tool for detecting bad wiring.

As defined by claim 5, embodiments of the bad wiring detection tool further comprise:
- a main group selector adapted to select the DSL for a main group if the bitrate impact of the DSL on at least one other DSL in the vectoring group is above a first bitrate threshold and the bitrate impact on the DSL by at least one other DSL in the vectoring group is above a second bitrate threshold.

Indeed, the tool for detecting bad wired DSLs relies on a bitrate threshold. Once the bitrate threshold is set, the tool may iteratively go through all lines of a given vectoring group and verify if the line impacts the bitrate of another line in the vectoring group more than the bitrate threshold or if the line's own bitrate is impacted more than the bitrate threshold by another line in the vectoring group. If any of these conditions holds true, the DSL is classified to belong to a main group. All lines that interact with each other and that are consequently correctly wired for optimal vectoring are added to the main group. If at the end of this repetitive process a line is not selected for the main group, this line is probably not assigned to the correct vectoring group and therefore a candidate for re-wiring.

As defined by claim 6, embodiments of the bad wiring detection tool further comprise:
- a line permutation module adapted to apply wiring permutation between multiple DSLs belonging to different vectoring groups and selected by the bad wired DSL selector.

Indeed, lines that are not selected for the main group or more generally, lines that are selected for re-wiring may be exchanged with lines that are selected for re-wiring in one or more different vectoring groups. Few combinations or permutations must be tested until all lines will belong to the main group in their respective vectoring groups because the number of vectoring groups in a single DSLAM or central office is typically very limited. Re-wiring recommendations hence can be given immediately.

In addition to a bad wiring detection tool as defined by claim 1, the disclosure also concerns embodiments of a method to detect bad wiring of a digital subscriber line or DSL that forms part of a vectoring group, the method being defined by claim 7, comprising:
- determining a bitrate impact of the DSL on each other DSL in the vectoring group;
- determining a bitrate impact on the DSL by each other DSL in the vectoring group; and
- selecting the DSL for re-wiring if the bitrate impact of the DSL on each other DSL in the vectoring group is below a first bitrate threshold and the bitrate impact on the DSL by each other DSL in the vectoring group is below a second bitrate threshold.

The disclosure further concerns a data processing system as defined by claim 8, comprising means for carrying out the method to detect bad wired DSLs.

In addition, the disclosure concerns a computer program as defined by claim 9, comprising software code adapted to perform the method to detect bad wired DSLs, and a computer readable storage medium as defined by claim 10, comprising such computer program.

### Brief Description of the Drawings

Fig. 1 is a functional block scheme of an embodiment of the bad wiring detection tool according to the invention;
Fig. 2 illustrates an embodiment of the method for detecting bad wired DSLs applied on a first vectoring group;
Fig. 3 illustrates an embodiment of the method for detecting bad wired DSLs applied on a second vectoring group; and
Fig. 4 schematically illustrates a suitable computing system for executing embodiments of the bad wiring detection tool according to the invention.

### Detailed Description of Embodiment(s)

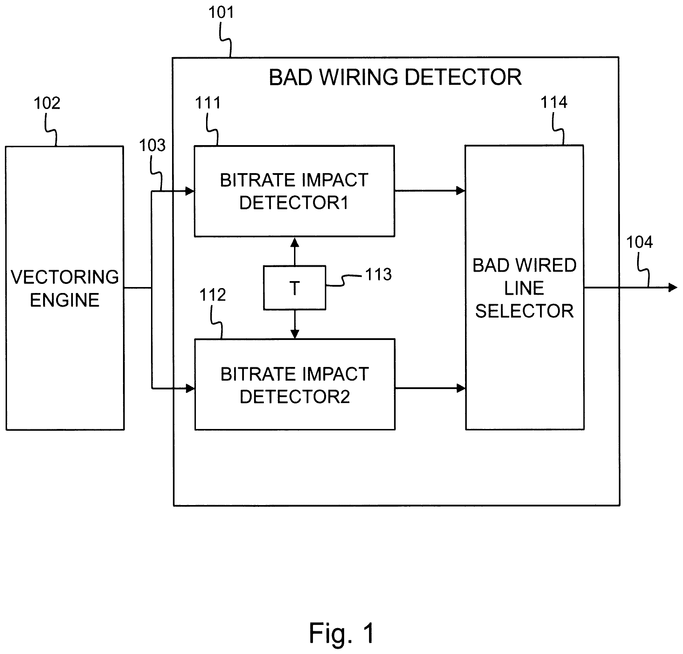

The bad wiring detector 101 drawn in Fig. 1 contains a first bitrate impact detector 111, a second bitrate impact detector 112, a threshold memory 113, and a bad wired line selector 114. Fig. 1 further shows a vectoring engine 102 whose output is connected to an input of the bad wiring detector 101.

The vectoring engine 102 has grouped the digital subscriber lines extending from a single central office DSLAM into two vectoring groups. Each of these vectoring groups is, by way of example, supposed to contain 10 lines. The vectoring engine 102 further is supposed to be aware of the vectoring gain matrix. Each element in this matrix represents the gain in bitrate for a victim line through cancellation of a disturber, in the assumption that vectoring is disabled. The vectoring gain matrix is easily measured using the collected operational parameters without having to measure complex parameters like the far end crosstalk or FEXT, the line attenuation also known as Hlog data, the power spectral density or PSD, etc., the measurement of which requires service interruption. The vectoring gain matrix for the first vectoring group and for the vectoring gain matrix for the second vectoring group are supplied as input 103 to the bad wiring detector 101.

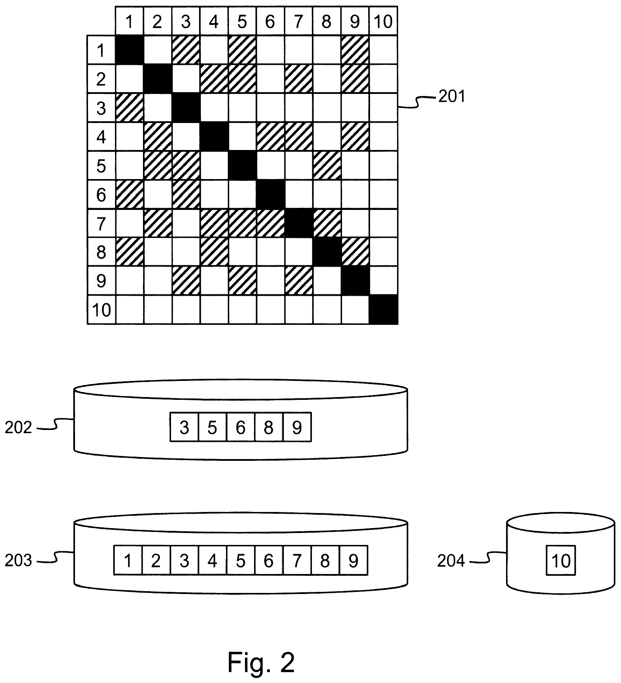

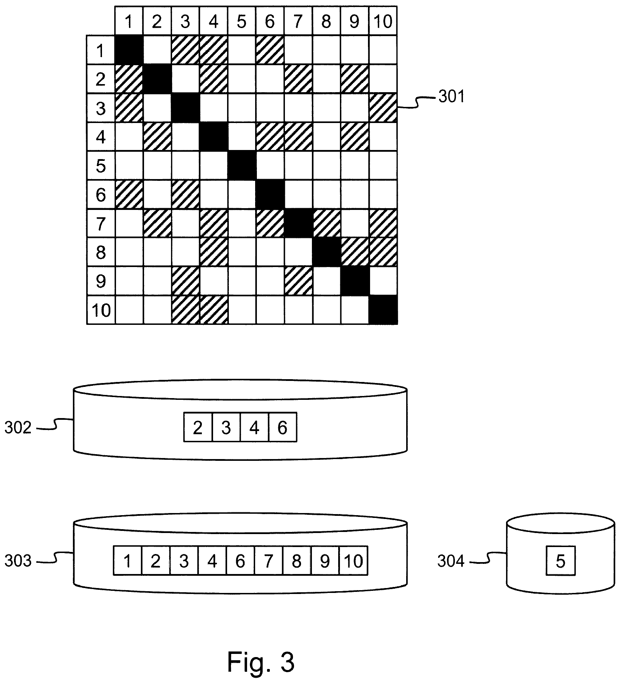

The vectoring gain matrix of the first vectoring group is referred to by 201 in Fig. 2. The vectoring gain matrix of the second vectoring group is referred to by 301 in Fig. 3. In the following paragraphs, it is explained in detail how the bad wiring detector 101 uses these vectoring gain matrices 201 and 301 in order to detect bad wiring of certain digital subscriber lines and to select lines for re-wiring. In the vectoring gain matrix 201 of the first vectoring group, the rows represent victim lines 1-10 of the first vectoring group and the columns represent disturber lines 1-10 of the first vectoring group. The bitrate impact value on row i and column j in other words represents the gain in bitrate in line i when line j is cancelled, assuming that vectoring is disabled for the first vectoring group. In Fig. 2, a cell in the matrix 201 is left blank when the bitrate impact value is below threshold T, and a cell in the matrix 201 is shaded with a diagonal pattern when the bitrate impact value is equal to or higher than the threshold T.

The first bitrate impact detector 111 determines for each line in the first vectoring group, i.e. for each row in the matrix 201 shown in Fig. 2, which other lines in the first vectoring group impact its bitrate by more than a threshold T. The first bitrate impact detector 111 thereto consults the vectoring gain matrix 201 received from the vectoring engine 102. In a first iteration, the first bitrate impact detector 111 scans the first row of the vectoring gain matrix 201, compares the bitrate impact values of this row with a threshold value T memorized in memory 113, and as a result of this comparison adds lines 3, 5 and 9 to the main group 202 shown in Fig. 2.

Similarly, the second bitrate impact detector 112 determines for each line in the first vectoring group, i.e. for each column in the matrix 201 shown in Fig. 2, which other lines in the first vectoring group are bitrate impacted by more than the threshold T. The second bitrate impact detector 112 consequently also consults the vectoring matrix 201 received from the vectoring engine 102. In a first iteration, the second bitrate impact detector 112 scans the first column of the vectoring gain matrix 201, compares the bitrate impact values of this column with the threshold value T memorized in memory 113, and as a result of the comparison adds lines 3, 6 and 8 to the main group 202 in Fig. 2.

After a first iteration wherein the bitrate impact of the first vectoring group on line 1 and the bitrate impact induced by line 1 within the first vectoring group has been analysed, the main group 202 consists of lines 3, 5, 6, 8 and 9.

The above searches for lines that are bitrate impacted by more than the threshold T or that impact the bitrate of other lines by more than the threshold T, are executed for lines 1-10 of the first vectoring group in consecutive iterations. As a result, after 10 iterations, the first bitrate impact detector 111 and the second bitrate impact detector 112 will have created a main group 203 for the first vectoring group containing the lines 1, 2, 3, 4, 5, 6, 7, 8 and 9. This is reported to the bad wired line selector 114 which concludes that line 10 is the sole line in the first vectoring group that is not significantly bitrate impacted by the other lines of the first vectoring group and that does not significantly impact the other lines in the first vectoring group. Line 10 of the first vectoring group is therefore selected by the bad wired line selector 114 for re-wiring, as is indicated by 204 in Fig. 2.

In the vectoring gain matrix 301 of the second vectoring group, the rows represent victim lines 1-10 in the second vectoring group and the columns represent disturber lines 1-10 in the second vectoring group. The bitrate impact value on row k and column I in other words represents the gain in bitrate in line k when line I is cancelled, assuming that vectoring is disabled for the second vectoring group. In Fig. 3, a cell in the matrix 301 is left blank when the bitrate impact value is below threshold T, and a cell in the matrix 301 is shaded with a diagonal pattern when the bitrate impact value is equal to or higher than the threshold T.

The first bitrate impact detector 111 determines for each line in the second vectoring group, i.e. for each row in the matrix 301 shown in Fig. 3, which other lines in the second vectoring group impact its bitrate by more than the threshold T. The first bitrate impact detector 111 thereto consults the vectoring gain matrix 301 received from the vectoring engine 102. In a first iteration, the first bitrate impact detector 111 scans the first row of the vectoring gain matrix 301, compares the bitrate impact values of this row to the threshold value T memorized in memory 113, and as a result of this comparison adds lines 3, 4 and 6 to the main group 302 shown in Fig. 3.

Similarly, the second bitrate impact detector 112 determines for each line in the second vectoring group, i.e. for each column in the matrix 301 shown in Fig. 2, which other lines in the second vectoring group are bitrate impacted by more than the threshold T. The second bitrate impact detector 112 consequently also consults the vectoring matrix 301 received from the vectoring engine 102. In a first iteration, the second bitrate impact detector 112 scans the first column of the vectoring gain matrix 301, compares the bitrate impact values of this column with the threshold value T memorized in memory 113, and as a result of the comparison adds lines 2, 3 and 6 to the main group 302 in Fig. 3.

After a first iteration wherein the bitrate impact of the second vectoring group on line 1 and the bitrate impact induced by line 1 within the second vectoring group has been analysed, the main group 302 consists of lines 2, 3, 4 and 6.

The above searches for lines that are bitrate impacted by more than the threshold T or that impact the bitrate of other lines by more than the threshold T, are executed for lines 1-10 of the second vectoring group in consecutive iterations. As a result, after 10 iterations, the first bitrate impact detector 111 and the second bitrate impact detector 112 will have created a main group 303 for the second vectoring group containing the lines 1, 2, 3, 4, 6, 7, 8, 9 and 10. This is reported to the bad wired line selector 114 which concludes that line 5 is the sole line in the second vectoring group that is not significantly bitrate impacted by the other lines of the second vectoring group and that does not significantly impact the other lines in the second vectoring group. Line 5 of the second vectoring group is therefore selected by the bad wired line selector 114 for re-wiring, as is indicated by 304 in Fig. 3.

As a result of the above described process, the bad wired line selector 114 has selected line 10 of the first vectoring group and line 5 of the second vectoring group as bad wired digital subscriber lines. This is reported by the bad wired line selector 114 as is indicated by arrow 104 in Fig. 1. In case two lines in neighbouring vector groups are selected as badly wired, line permutation module coupled to or integrated in the bad wiring detector 101 can suggest to exchange these two lines. This way, re-wiring recommendations are given immediately enabling the DSL operator to re-wire lines in an attempt to improve the efficiency of vectoring.

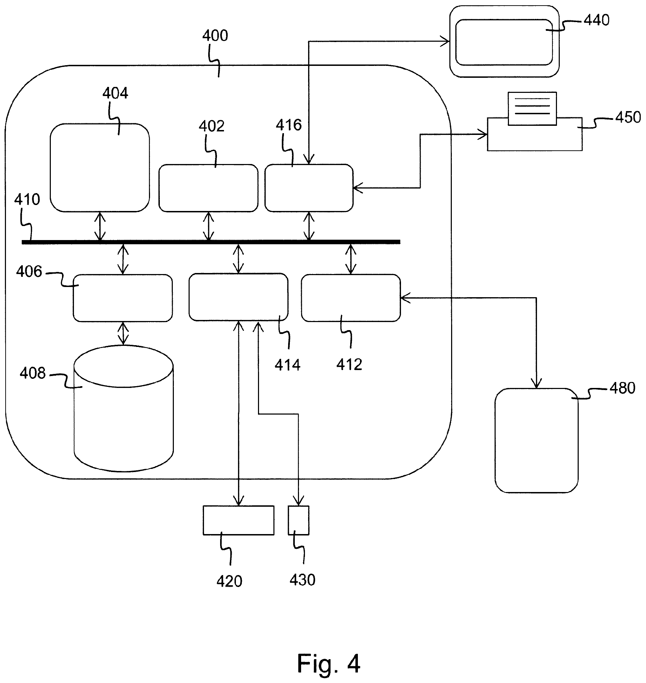

Fig. 4 shows a suitable computing system 400 for hosting the bad wiring detector 101 of Fig. 1. Computing system 400 may in general be formed as a suitable general purpose computer and comprise a bus 410, a processor 402, a local memory 404, one or more optional input interfaces 414, one or more optional output interfaces 416 a communication interface 412, a storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random access memory (RAM) or another type of dynamic storage device that stores information and instructions for execution by processor 402 and/or a read only memory (ROM) or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example two 1 Gb Ethernet interfaces that enables computing system 400 to communicate with other devices and/or systems, for example mechanisms for communicating with one or more other computing systems 480. The communication interface 412 of computing system 400 may be connected to such another computing system by means of a local area network (LAN) or a wide area network (WAN, such as for example the internet, in which case the other computing system 480 may for example comprise a suitable web server. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example 1TB SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. The system 400 described above can also run as a Virtual Machine above the physical hardware.

The bad wiring detector 101 of Fig. 1 can be implemented as programming instructions stored in local memory 404 of the computing system 400 for execution by its processor 402. Alternatively the bad wiring detector 101 of Fig. 1 could be stored on the storage element 408 or be accessible from another computing system 480 through the communication interface 412.

Although the method for detecting bad wired digital subscriber lines has been illustrated here above using the vectoring gain matrices 201 and 301, an equivalent alternative could make use of the vectoring cost matrices. In the vectoring cost matrix, each element would represent the loss in bitrate in a victim line through non-cancellation of a disturber line in the assumption that vectoring is enabled for the vectoring group.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A bad wiring detection tool (101) adapted to detect bad wiring of a digital subscriber line DSL that forms part of a vectoring group, said bad wiring detection tool (101) comprising:
- a first bitrate impact detector (111) adapted to determine a bitrate impact of said DSL on each other DSL in said vectoring group;
- a second bitrate impact detector (112) adapted to determine a bitrate impact on said DSL by each other DSL in said vectoring group; and
- a bad wired DSL selector (114) adapted to select said DSL for re-wiring if the bitrate impact of said DSL on each other DSL in said vectoring group is below a first bitrate threshold (T) and the bitrate impact on said DSL by each other DSL in said vectoring group is below a second bitrate threshold (T).

2. A bad wiring detection tool (101) according to claim 1,
wherein said first bitrate threshold (T) is equal to said second bitrate threshold (T).

3. A bad wiring detection tool (101) according to claim 1,
wherein said bitrate impact corresponds to a gain in bitrate in a victim DSL as a result of cancellation of disturbances from a disturber DSL while vectoring is disabled.

4. A bad wiring detection tool (101) according to claim 1,
wherein said bitrate impact corresponds to a loss in bitrate in a victim DSL as a result from non-cancellation of disturbances from a disturber DSL while vectoring is enabled.

5. A bad wiring detection tool (101) according to claim 1, further comprising:
- a main group selector (111, 112) adapted to select said DSL for a main group if the bitrate impact of said DSL on at least one other DSL in said vectoring group is above a first bitrate threshold and the bitrate impact on said DSL by at least one other DSL in said vectoring group is above a second bitrate threshold.

6. A bad wiring detection tool (101) according to claim 1, further comprising:
- a line permutation module adapted to apply wiring permutation between multiple DSLs belonging to different vectoring groups and selected by said bad wired DSL selector.

7. A method to detect bad wiring of a digital subscriber line DSL that forms part of a vectoring group, said method comprising:
- determining a bitrate impact (201; 301)) of said DSL on each other DSL in said vectoring group;
- determining a bitrate impact (201; 301) on said DSL by each other DSL in said vectoring group; and
- selecting said DSL for re-wiring if the bitrate impact of said DSL on each other DSL in said vectoring group is below a first bitrate threshold (T) and the bitrate impact on said DSL by each other DSL in said vectoring group is below a second bitrate threshold (T).

8. A data processing system comprising means for carrying out the method of claim 7.

9. A computer program comprising software code adapted to perform the method of claim 7.

10. A computer readable storage medium comprising the computer program of claim 9.

## Patentansprüche

1. Werkzeug (101) zum Erkennen einer Falschverdrahtung, das angepasst ist, um eine Falschverdrahtung eines digitalen Teilnehmeranschlusses DSL zu erkennen, der Teil einer Vectoring-Gruppe ist, wobei das besagte Werkzeug (101) zum Erkennen einer Falschverdrahtung Folgendes umfasst:
- einen ersten Bitratenauswirkungs-Detektor (111), der angepasst ist, um eine Bitratenauswirkung des besagten DSL auf jeden anderen DSL in der besagten Vectoring-Gruppe zu bestimmen;
- einen zweiten Bitratenauswirkungs-Detektor (112), der angepasst ist, um eine Bitratenauswirkung auf den besagten DSL durch jeden anderen DSL in der besagten Vectoring-Gruppe zu bestimmen; und
- eine Auswahlvorrichtung (114) eines falschverdrahteten DSL, die angepasst ist, um den besagten DSL für eine Neuverdrahtung auszuwählen, wenn die Bitratenauswirkung des besagten DSL auf jeden anderen DSL in der besagten Vectoring-Gruppe unter einem ersten Bitraten-Grenzwert (T) liegt und die Bitratenauswirkung auf den besagten DSL durch jeden anderen DSL in der besagten Vectoring-Gruppe unter einem zweiten Bitraten-Grenzwert (T) liegt.

2. Werkzeug (101) zum Erkennen einer Falschverdrahtung nach Anspruch 1,
wobei der besagte erste Bitraten-Grenzwert (T) gleich ist wie der besagte zweite Bitraten-Grenzwert (T).

3. Werkzeug (101) zum Erkennen einer Falschverdrahtung nach Anspruch 1,
wobei die besagte Bitratenauswirkung einer Bitratenverstärkung in einem Opfer-DSL als Ergebnis einer Aufhebung von Störungen aus einem Stör-DSL entspricht, während Vectoring deaktiviert ist.

4. Werkzeug (101) zum Erkennen einer Falschverdrahtung nach Anspruch 1,
wobei die besagte Bitratenauswirkung einem Bitratenverlust in einem Opfer-DSL als Ergebnis einer Nicht-Aufhebung von Störungen aus einem Stör-DSL entspricht, während Vectoring aktiviert ist.

5. Werkzeug (101) zum Erkennen einer Falschverdrahtung nach Anspruch 1, weiterhin umfassend:
- eine Hauptgruppen-Auswahlvorrichtung (111, 112), die angepasst ist, um den besagten DSL für eine Hauptgruppe auszuwählen, wenn die Bitratenauswirkung des besagten DSL auf mindestens einen anderen DSL in der besagten Vectoring-Gruppe über einem ersten Bitraten-Grenzwert liegt und die Bitratenauswirkung auf den besagten DSL durch mindestens einen anderen DSL in der besagten Vectoring-Gruppe über einem zweiten Bitraten-Grenzwert liegt.

6. Werkzeug (101) zum Erkennen einer Falschverdrahtung nach Anspruch 1, weiterhin umfassend:
- ein Anschlusspermutationsmodul, das angepasst ist, um eine Verdrahtungspermutation zwischen mehreren DSLs anzuwenden, die zu unterschiedlichen Vectoring-Gruppen gehören und die von der besagten Auswahlvorrichtung eines falschverdrahteten DSL ausgewählt werden.

7. Verfahren zum Erkennen einer Falschverdrahtung eines digitalen Teilnehmeranschlusses DSL, der Teil einer Vectoring-Gruppe ist, wobei das besagte Verfahren Folgendes umfasst:
- Bestimmen einer Bitratenauswirkung (201; 301) des besagten DSL auf jeden anderen DSL in der besagten Vectoring-Gruppe;
- Bestimmen einer Bitratenauswirkung (201; 301) auf den besagten DSL durch jeden anderen DSL in der besagten Vectoring-Gruppe; und
- Auswählen des besagten DSL für eine Neuverdrahtung, wenn die Bitratenauswirkung des besagten DSL auf jeden anderen DSL in der besagten Vectoring-Gruppe unter einem ersten Bitraten-Grenzwert (T) liegt und die Bitratenauswirkung auf den besagten DSL durch jeden anderen DSL in der besagten Vectoring-Gruppe unter einem zweiten Bitraten-Grenzwert (T) liegt.

8. Datenverarbeitungssystem, umfassend Mittel zum Ausführen des Verfahrens nach Anspruch 7.

9. Computerprogramm, umfassend einen Softwarecode, der zum Durchführen des Verfahrens nach Anspruch 7 angepasst ist.

10. Computerlesbares Speichermedium, umfassend das Computerprogramm nach Anspruch 9.

## Revendications

1. Outil de détection de mauvais câblage (101) adapté pour détecter un mauvais câblage d'une ligne d'abonné numérique DSL qui fait partie d'un groupe de vectorisation, ledit outil de détection de mauvais câblage (101) comprenant :
- un premier détecteur d'impact de débit binaire (111) adapté pour déterminer un impact de débit binaire de ladite DSL sur chaque autre DSL dans ledit groupe de vectorisation ;
- un second détecteur d'impact de débit binaire (112) adapté pour déterminer un impact de débit binaire sur ladite DSL par chaque autre DSL dans ledit groupe de vectorisation ; et
- un sélecteur de DSL mal câblée (114) adapté pour sélectionner ladite DSL pour un re-câblage si l'impact de débit binaire de ladite DSL sur chaque autre DSL dans ledit groupe de vectorisation est au-dessous d'un premier seuil de débit binaire (T) et l'impact de débit binaire sur ladite DSL par chaque autre DSL dans ledit groupe de vectorisation est au-dessous d'un second seuil de débit binaire (T).

2. Outil de détection de mauvais câblage (101) selon la revendication 1,
dans lequel ledit premier seuil de débit binaire (T) est égal audit second seuil de débit binaire (T).

3. Outil de détection de mauvais câblage (101) selon la revendication 1,
dans lequel ledit impact de débit binaire correspond à un gain de débit binaire dans une DSL victime à la suite de l'annulation de perturbations en provenance d'une DSL perturbatrice alors que la vectorisation est désactivée.

4. Outil de détection de mauvais câblage (101) selon la revendication 1,
dans lequel ledit impact de débit binaire correspond à une perte de débit binaire dans une DSL victime à la suite de la non-annulation de perturbations en provenance d'une DSL perturbatrice alors que la vectorisation est activée.

5. Outil de détection de mauvais câblage (101) selon la revendication 1, comprenant en outre :
- un sélecteur de groupe principal (111, 112) adapté pour sélectionner ladite DSL pour un groupe principal si l'impact de débit binaire de ladite DSL sur au moins une autre DSL dans ledit groupe de vectorisation est au-dessus d'un premier seuil de débit binaire et l'impact de débit binaire sur ladite DSL par au moins une autre DSL dans ledit groupe de vectorisation est au-dessus d'un second seuil de débit binaire.

6. Outil de détection de mauvais câblage (101) selon la revendication 1, comprenant en outre :
- un module de permutation de ligne adapté pour appliquer une permutation de câblage entre de multiples DSL appartenant à des groupes de vectorisation différents et sélectionnées par ledit sélecteur de DSL mal câblée.

7. Procédé pour détecter un mauvais câblage d'une ligne d'abonné numérique DSL qui fait partie d'un groupe de vectorisation, ledit procédé comprenant les étapes suivantes :
- déterminer un impact de débit binaire (201 ; 301) de ladite DSL sur chaque autre DSL dans ledit groupe de vectorisation ;
- déterminer un impact de débit binaire (201 ; 301) sur ladite DSL par chaque autre DSL dans ledit groupe de vectorisation ; et
- sélectionner ladite DSL pour un re-câblage si l'impact de débit binaire de ladite DSL sur chaque autre DSL dans ledit groupe de vectorisation est au-dessous d'un premier seuil de débit binaire (T) et l'impact de débit binaire sur ladite DSL par chaque autre DSL dans ledit groupe de vectorisation est au-dessous d'un second seuil de débit binaire (T).

8. Système de traitement de données comprenant des moyens pour exécuter le procédé de la revendication 7.

9. Programme informatique comprenant un code logiciel adapté pour effectuer le procédé de la revendication 7.

10. Support de stockage lisible par ordinateur comprenant le programme informatique de la revendication 9.
